# EUROPEAN PATENT APPLICATION

(11) **EP 0 874 030 A2**
(43) Date of publication of application: **28.10.1998**
(21) Application number: 98303188.1
(22) Date of filing: 24.04.1998
(51) Int. Cl.: C09D 11/12, B41M 5/38

(54) **Water-based printing composition and thermal transfer ribbon comprising it**

(30) Priority: 25.04.1997 GB 9708518
(71) Applicant: Kores Nordic (GB) Ltd., Harlow, Essex CM20 2AL (GB)
(72) Inventor: Tilley, Andrew, Bishops Stortford Hertfordshire CM23 5EJ (GB); McClean, Michael Dennis, Epping, Essex, CM16 7LZ (GB); Wood, Kevin Brian, Bishops Stortford Hertfordshire CM22 6LH (GB)
(74) Representative: Allard, Susan Joyce

(57) **Abstract**

The present invention relates to the field of thermal transfer printing and, in particular, to water-based pigmented compositions for use in thermal transfer printing ribbons. A pigmented composition for use in a thermal transfer printing ribbon is provided, which composition comprises a styrene acrylate emulsion in water, an emulsion of a polymeric material in water, the said polymeric material having a T_{g} in the range of from 80 to 120°C, and a wax emulsion in water, wherein the ratio (w/w solids) of the styrene acrylate emulsion to the said polymeric material emulsion is in the range of from 20:1 to 1:3.

## Description

The present invention relates to the field of thermal transfer printing and, in particular, to water-based pigmented compositions for use in thermal transfer printing ribbons.

Thermal transfer printing is a non-impact printing process which does not require special chemically treated papers, but instead relies on a disposable ribbon. The technique may be used to print images on to most types of printing media, including paper, coated paper, cardboard, plastic films, metals and fabrics.

The printed image is produced using an inked thermal transfer ribbon which comprises a laminate of a ribbon substrate and an overlying ink or pigmented layer.

In operation, a thermal print head is kept in contact with the thermal transfer ribbon/printing medium sandwich by means of pressure at the point of impression. By rapidly heating and cooling the dots or pixels on the print head in the required formation, a printed image can be formed on the printing medium as the ink melts and transfers from the ribbon substrate to the printing medium at the spot where the resistor dot touches the ribbon. A release layer may be interposed between the ribbon substrate and the pigmented layer to facilitate separation.

The heating and cooling cycles occur very quickly, despite the need for the heating element to rise to a temperature well above the melting point of the ribbon ink in order to create the image.

The ribbon substrate is typically a thin (approximately 3 to 6µm) polyester (PET) film. In order to prevent the PET film sticking to the thermal print head, the film is usually provided with an anti-stick coating.

In addition to the various pigment constituents, thermal transfer ink formulations typically contain one or more waxes and resins which act as binders for the pigments, and various additives, such as plasticisers, extenders, keying agents, etc., which modify the properties of the formulation.

If a release layer is provided, then it will become the top layer after printing and the pigmented layer will be sandwiched between the release layer and the printing medium. The presence of the release layer provides additional protection for the pigmented layer and this results in improved smear and scratch resistance.

A key coat may be used to augment adherence of the pigmented layer to the ribbon substrate.

Some labels and tags, particularly those formed from synthetic materials or those having a rough surface, such as vellum, are not very receptive to thermal transfer ink. In such cases, the pigmented layer can be top coated to improve adhesion.

The pigmented layer is formed by applying a coating of a suitable ink formulation in liquid-form on to the ribbon substrate. This is usually achieved by dissolving the various constituents of the formulation in one or more organic solvents. Once the ribbon substrate has been coated with the liquid formulation, the solvent(s) are allowed to evaporate and the various constituents coalesce to form the pigmented layer. Alternatively, the ink formulation may be heated and applied in a hot-melt form. The printing industry is, however, now moving away from the use of organic solvents in view of the related health, safety and environmental concerns, whilst applying the ink formulation in hot-melt form adds to production costs and gives a less satisfactory coverage.

It is therefore an object of the present invention to provide water-based liquid compositions for use in thermal transfer printing ribbons, which are at least comparable in terms of print and coating performance with conventional formulations.

Accordingly, in a first aspect the present invention provides a pigmented composition for use in a thermal transfer printing ribbon, which composition comprises a styrene acrylate emulsion in water, an emulsion of a polymeric material in water, the said polymeric material having a T_{g} in the range of from 80 to 120°C, and a wax emulsion in water, wherein the ratio (w/w solids) of the styrene acrylate emulsion to the said polymeric material emulsion is in the range of from 20:1 to 1:3. (T_{g} = glass transition temperature).

The said polymeric material preferably has a T_{g} in the range of from 90 to 110°C and advantageously comprises polystyrene.

Preferably, the ratio (w/w solids) of the styrene acrylate emulsion to the said polymeric material emulsion is in the range of from about 5:1 to about 1:1, more preferably about 2:1.

The styrene acrylate in the emulsion preferably has a minimum film forming temperature in the range of from about 15 to about 30°C, more preferably about 20 to about 25°C, and this characteristic results in enhanced adhesion to rough surfaces.

Particularly preferred styrene acrylate emulsions are those having a solids content of from about 30 to about 60%, more preferably from 40 to 50. Particularly preferred emulsions of the said polymeric material are those having a solids content of from about 45 to about 65%, more preferably from 50 to 60%. The styrene acrylate may be a copolymer of styrene and acrylic acid, salts thereof or esters thereof.

The ratio (w/w solids) of the wax emulsion to the total of the styrene acrylate and said polymeric material emulsions is preferably in the range of from about 7:1 to about 1:2.

Advantageously, the pigmented composition further comprises a polyacrylic acid/ester dispersion in water. In this case, the polyacrylic acid/ester dispersion typically comprises about 10 to about 50% water, more preferably from about 20 to about 40% water. The inventors have found that this constituent imparts flexibility to the pigment coating prior to printing , which results in an improved resistance to stripping.

In a second aspect of the present invention there is provided a pigmented composition for use in a thermal transfer printing ribbon, which composition comprises a wax emulsion in water and a carboxylated acrylic copolymer emulsion in water, wherein the ratio (w/w solids) of the wax emulsion to carboxylated acrylic copolymer emulsion is in the range of from about 5:1 to about 1:1.

The ratio (w/w solids) of the wax emulsion to carboxylated acrylic copolymer emulsion is preferably in the range of from about 3:1 to about 3:2, more preferably about 2:1.

The carboxylated acrylic copolymer preferably has a glass transition temperature (T_{g}) in the range of from about 0 to about 35°C, more preferably about 5 to about 30°C.

Particularly preferred carboxylated acrylic copolymer emulsions are those having a solids content of from about 35 to about 60%, more preferably from about 45 to 55%. The carboxylated acrylic copolymer is preferably a copolymer of an acrylamide and a salt of acrylic acid, for example sodium acrylate.

Advantageously, the pigmented composition according to the second aspect of the invention further comprises a rosin ester emulsion in water. The rosin ester is preferably a hard rosin ester having a melting point of from about 65 to about 85°C, more preferably from about 70 to about 80°C. The ratio of the carboxylated acrylic copolymer emulsion to the rosin ester emulsion is preferably in the range of from about 40:1 to about 1:1. Particularly preferred rosin ester emulsions are those having a solids content of from about 40 to about 60%, more preferably from about 45 to 55%. The inventors have found that the adhesive properties of the pigmented layer are significantly improved by the addition of the rosin ester emulsion and this is especially beneficial when printing on to lacquer coated synthetic labels and uncoated rough labels.

In both the first and second aspects of the present invention, suitable wax emulsions may include one or more of the following waxes: Carnauba, paraffin, polyethylene, PTFE, Beeswax, Montan, Fischer-Tropsch, Microcrystalline, alpha olefin/maleic anhydride and Candelila. Carnauba is the most preferred. The wax emulsion preferably has a solids content of from about 15 to about 40%, more preferably about 20 to about 35%

In both the first and second aspects of the present invention, the pigmented composition typically contains a pigment comprising carbon black. It will be appreciated that other black and coloured pigments conventional in the art may also be used, such as Kromacryl black B, Kromacryl blue GT, Kromacryl red FGR, Kromacryl green, Aquacolour (PA) black 7, Liquaplus black, Microlith black C-wa, Special black 4. The pigment will typically be provided as a dispersion in water with a solids content of preferably from about 30 to about 50%, more preferably about 35 to about 45%.

The pigmented compositions according to the first and second aspects of the present invention may further contain one or more of a surfactant/wetting agent, for example a sulphosuccinate, an antifoaming agent, such as a mineral oil antifoaming agent, a filler, a stabilizer, a lubricant, a reinforcing agent, a plasticizer, an extender, a keying agent, an adhesion promoter and a pH adjustment agent. With regard to the latter, suitable examples include one or more of 2-amino-2-methyl-1-propanol, 2-amino-2-ethyl-1,3-propanediol and 2-dimethylamino-2-methyl-1-propanol.

The pigmented composition according to the first and second aspects of the present invention may be coated on to a ribbon substrate, for example a polyester (PET) film, utilizing conventional coating equipment and techniques. Once the ribbon substrate has been coated it may be heated in one or more ovens to drive the water off so that the various constituents may coalesce to form the pigmented layer. If desired a release and/or scratch resistant layer may be interposed between the ribbon substrate and the pigmented layer.

To facilitate the coating operation, the pigmented composition may be diluted further by the addition of water. It will be appreciated that fine control of the viscosity of the composition may be achieved in this manner which enables coverage of the ribbon substrate to be optimised.

A particularly preferred pigmented composition according to the first aspect of the present invention comprises:

| | % w/w solids |
|---|---|
| Styrene acrylate emulsion (solids content 30 to 60%) | 5 to 20 |
| | |
| Polystyrene emulsion (solids content 45 to 65%) | 1 to 15 |
| | |
| Wax emulsion (solids content 15 to 40%) | 15 to 40 |
| | |
| Carbon black dispersion in water (solids content 30 to 50%) | 5 to 20 |
| | |
| Polyacrylic acid/ester dispersion in water (water content 10 to 50%) | 0 to 5 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 10 |
| | |
| Water | 0 to 74 |

Still more preferably, the pigmented composition according to the first aspect of the present invention comprises:

| | % w/w solids |
|---|---|
| Styrene acrylate emulsion (solids content 30 to 60%) | 9 to 16 |
| | |
| Polystyrene emulsion (solids content 45 to 65%) | 1 to 8 |
| | |
| Wax emulsion (solids content 15 to 40%) | 20 to 30 |
| | |
| Carbon black dispersion in water (solids content 30 to 50%) | 10 to 18 |
| | |
| Polyacrylic acid/ester dispersion in water (water content 10 to 50%) | 0.2 to 1 |
| | |
| Antifoaming agent | 0.1 to 1 |
| | |
| Surfactant/wetting agent | 1 to 5 |
| | |
| Water | 0 to 59 |

A particularly preferred pigmented composition according to the second aspect of the present invention comprises:

| | % w/w solids |
|---|---|
| Carboxylated acrylic copolymer emulsion (solids content 30 to 60%) | 15 to 40 |
| | |
| Rosin ester emulsion (solids content 40 to 60%) | 0 to 15 |
| | |
| Wax emulsion (solids content 15 to 40%) | 40 to 75 |
| | |
| Carbon black dispersion in water (solids content 30 to 50%) | 5 to 30 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 10 |
| | |
| Water | 0 to 40 |

Still more preferably, the pigmented composition according to the second aspect of the present invention comprises:

| | % w/w solids |
|---|---|
| Carboxylated acrylic copolymer emulsion (solids content 35 to 60%) | 20 to 35 |
| | |
| Rosin ester emulsion (solids content 40 to 60%) | 1 to 10 |
| | |
| Wax emulsion (solids content 15 to 40%) | 50 to 60 |
| | |
| Carbon black dispersion in water (solids content 30 to 50%) | 10 to 25 |
| | |
| pH adjustment agent | 0.5 to 2 |
| | |
| Antifoaming agent | 0 to 3 |
| | |
| Surfactant/wetting agent | 0 to 5 |
| | |
| Water | 0 to 19 |

In a third aspect, the present invention provides a release and/or scratch resistant composition for use in a thermal transfer printing ribbon, which composition comprises a polyethylene wax emulsion in water and an ethylene vinyl acetate emulsion in water, wherein the ratio (w/w solids) of the polyethylene wax emulsion to the ethylene vinyl acetate emulsion is in the range of from about 30:1 to about 1:2, preferably from about 6:1 to about 2:1.

Advantageously the polyethylene wax has a melting point in the range of from about 100 to about 130°C, preferably from about 110 to about 120°C, and this provides very good resistance to scratching.

The polyethylene wax emulsion preferably has a solids content in the range of from about 40 to about 60%, more preferably from about 45% to about 55%.

The ethylene vinyl acetate emulsion preferably has a solids content in the range of from 45 to 70%, more preferably about 50% to about 60%.

The release and/or scratch resistant composition may further comprise an additional wax emulsion in water, wherein the wax is selected from one or more of Carnauba, paraffin, PTFE, Beeswax, Montan, Fischer-Tropsch, Microcrystalline, alpha olefin/maleic anhydride and Candelila. The additional wax emulsion preferably comprises Carnauba wax.

The additional wax emulsion preferably has a solids content in the range of from about 15 to about 40%, more preferably from about 20 to about 35%.

It will be appreciated that the release and/or scratch resistant may further comprise one or more of a surfactant/wetting agent, an antifoaming agent, a pH adjustment agent, a filler, a stabilizer, a lubricant, a reinforcing agent, a plasticizer, an extender, an adhesion promoter and a keying agent

A particularly preferred release and/or scratch resistant composition comprises:

| | % w/w solids |
|---|---|
| Polyethylene wax emulsion (solids content 40 to 60%) | 5 to 30 |
| | |
| Ethylene vinyl acetate emulsion (solids content 45 to 70%) | 1 to 10 |
| | |
| Carnauba wax emulsion (solids content 15 to 40%) | 60 to 94 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 10 |
| | |
| Water | 0 to 34 |

Still more preferably, the release and/or scratch resistant composition according to the third aspect of the present invention comprises:

| | % w/w solids |
|---|---|
| Polyethylene wax emulsion (solids content 40 to 60%) | 5 to 10 |
| | |
| Ethylene vinyl acetate emulsion (solids content 45 to 70%) | 1 to 5 |
| | |
| Carnauba wax emulsion (solids content 15 to 40%) | 85 to 94 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 5 |
| | |
| Water | 0 to 9 |

The present invention further provides for a thermal transfer printing ribbon having a pigmented layer formed from a pigmented composition as herein described. The thermal transfer printing ribbon may have a release and/or scratch resistant layer adjacent to the pigmented layer. In this case, the release and/or scratch resistant layer is preferably as herein described.

The present invention also provides a method for making a thermal transfer printing ribbon comprising the steps of:
(i) providing a ribbon substrate; and
(ii) coating the ribbon substrate with a pigmented composition as herein described to thereby form a pigmented layer overlying the ribbon substrate.

If a release and/or scratch resistant layer is to be included, then the method comprises the steps of:
(i) providing a ribbon substrate;
(ii) coating the ribbon substrate with a release and/or scratch resistant composition to thereby form a release and/or scratch resistant layer overlying the ribbon substrate;
(iii) coating the release and/or scratch resistant layer formed in step (ii) with a pigmented composition as herein described to thereby form a pigmented layer overlying the release/scratch resistant layer. In this case, in step (ii), the ribbon substrate is preferably coated with a release and/or scratch resistant composition as herein described.

The ribbon substrate is typically a polyester film and advantageously has an anti-stick coating provided on a surface thereof, which surfaces faces away from the pigmented layer.

It will be appreciated that the pigmented layer (and the release and/or scratch resistant layer if present) will form when substantially all of the water in the composition has been lost owing to evaporation. This process may be expedited by passing the ribbon through one or more ovens at a temperature in excess of about 50°C. The present invention also provides for a thermal transfer printing ribbon whenever formed by a method as herein described.

### EXAMPLES

The present invention will now be described further with reference to the following examples, in which: Examples 1 and 2 relate to the first aspect of the present invention; Examples 3 and 4 to the second aspect; and Examples 5 and 6 to the third aspect.

| | Example 1 | Example 2 |
|---|---|---|
| Carnauba wax emulsion (solids content 25±5%) Michelman Inc. | 27.7 | 27.7 |
| | | |
| Carbon black dispersion in water (solids content 40±5%) Croda Colours Ltd. | 16.6 | 12.1 |
| | | |
| Styrene acrylate emulsion (solids content 50±5%) Harco Chemicals Ltd. | 13.8 | 13.8 |
| | | |
| Polystyrene emulsion (solids content 55±5%) Harco Chemicals Ltd. | 5.5 | 2.7 |
| | | |
| Wetting agent Allied Colloids Ltd. | 3.3 | 3.3 |
| | | |
| Antifoam Henkel Nopco | 0.1 | 0.1 |
| | | |
| Distilled water | 32.3 | 39.6 |
| | | |
| Polyacrylic acid/ester dispersion in water (water content 30±5%) Allied Colloids Ltd. | 0.7 | 0.7 |
| | | |
| **TOTAL UNITS** | 100.0 | 100.0 |

The ingredients were added in the order shown above (with stirring) to a plastic mixing vessel and agitated at room temperature with a low shear stirrer until thoroughly mixed. Each of the compositions was then coated in a conventional manner on to a ribbon substrate and allowed to dry to form a pigmented layer, optionally with the incorporation of a release layer. The thus produced thermal transfer printing ribbons performed well and were capable of being printed on to most label types, whilst still producing sharp printed images and exhibiting good scratch resistance.

| | Example 3 | Example 4 |
|---|---|---|
| Carnauba wax emulsion (solids content 25±5%) Michelman Inc. | 55.0 | 55.0 |
| | | |
| Carbon black dispersion in water (solids content 40±5%) Croda Colours Ltd. | 22.0 | 13.0 |
| | | |
| Carboxylated acrylic co-polymer emulsion (solids content 46±5%) Allied Colloids Ltd. | 23.0 | 32.0 |
| | | |
| 2-dimethylamino-2-methyl-1-propanol Samuel Banner Ltd. | adjust pH to 7.0 | adjust pH to 7.0 |
| | | |
| **TOTAL UNITS** | 100.0 | 100.0 |

The ingredients were added in the order shown above (with stirring) to a plastic mixing vessel and agitated at room temperature with a low shear stirrer until thoroughly mixed. Each of the compositions was then coated in a conventional manner on to a ribbon substrate and allowed to dry to form a pigmented layer, optionally with the incorporation of a release layer. The thus produced thermal transfer printing ribbons performed well, giving sharp printed images, good scratch resistance and having the capacity to be printed on most label types.

| | Example 5 | Example 6 |
|---|---|---|
| Polyethylene wax emulsion (solids content 50±5%) Michelman Inc. | 28.8 | 28.2 |
| | | |
| Carnauba wax emulsion (solids content 25±5%) Michelman Inc. | 64.8 | 63.4 |
| | | |
| Ethylene vinyl acetate emulsion (solids content 55±5%) Mowilith | 6.4 | 8.4 |
| | | |
| **TOTAL UNITS** | 100.0 | 100.0 |

The ingredients were added in the order shown above (with stirring) to a plastic mixing vessel and agitated at room temperature with a low shear stirrer until thoroughly mixed. Each of the compositions was then coated in a conventional manner on to a ribbon substrate and allowed to dry to thereby form a release/scratch resistant layer, on to which a pigmented composition according to any of Examples 1 to 4 was subsequently applied. The thus produced thermal transfer printing ribbons performed well, exhibiting sharp printed images and having good scratch resistance and release properties.

The pigmented compositions according to the present invention exhibit good adhesion to rough surfaces and provide sharp edge definition to the printed image. Because the compositions are water based, the health, safety and environmental concerns associated with the use of organic solvents are addressed.

## Claims

1. A pigmented composition for use in a thermal transfer printing ribbon, which composition comprises a styrene acrylate emulsion in water, an emulsion of a polymeric material in water, the said polymeric material having a T_{g} in the range of from 80 to 120°C, and a wax emulsion in water, wherein the ratio (w/w solids) of the styrene acrylate emulsion to the said polymeric material emulsion is in the range of from 20:1 to 1:3.

2. A pigmented composition as claimed in claim 1, wherein the said polymeric material has a T_{g} in the range of from 90 to 110°C and preferably comprises polystyrene.

3. A pigmented composition as claimed in claim 1 or claim 2, wherein the said ratio is in the range of from 5:1 to 1:1, preferably approximately 2:1.

4. A pigmented composition as claimed in any one of the preceding claims, wherein the styrene acrylate has a minimum film forming temperature in the range of from 15 to 30°C.

5. A pigmented composition as claimed in any one of the preceding claims, wherein the styrene acrylate emulsion has a solids content in the range of from 30 to 60% and/or the said polymeric material emulsion has a solids content in the range of from 45 to 65%.

6. A pigmented composition as claimed in any one of the preceding claims, wherein the ratio (w/w solids) of the wax emulsion to the total of the styrene acrylate and said polymeric material emulsions is in the range of from 7:1 to 1:2.

7. A pigmented composition as claimed in any one of the preceding claims, further comprising a polyacrylic acid/ester dispersion in water.

8. A pigmented composition as claimed in any one of the preceding claims, wherein the wax emulsion comprises one or more of the following waxes Carnauba, paraffin, polyethylene, PTFE, Beeswax, Montan, Fischer-Tropsch, Microcrystalline, alpha olefin/maleic anhydride and Candelila, preferably having a solids content in the range of from 15 to 40%.

9. A pigmented composition as claimed in any one of the preceding claims, which contains a pigment comprising carbon black or a coloured pigment.

10. A pigmented composition as claimed in any one of the preceding claims, which comprises:
| | % w/w solids |
|---|---|
| Styrene acrylate emulsion (solids content 30 to 60%) | 5 to 20 |
| | |
| Polystyrene emulsion (solids content 45 to 65%) | 1 to 15 |
| | |
| Wax emulsion (solids content 15 to 40%) | 15 to 40 |
| | |
| Carbon black dispersion in water (solids content 30 to 50%) | 5 to 20 |
| | |
| Polyacrylic acid/ester dispersion in water (water content 10 to 50%) | 0 to 5 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 10 |
| | |
| Water | 0 to 74 |

11. A pigmented composition for use in a thermal transfer printing ribbon, which composition comprises a wax emulsion in water and a carboxylated acrylic copolymer emulsion in water, wherein the ratio (w/w solids) of the wax emulsion to carboxylated acrylic copolymer emulsion is in the range of from 5:1 to 1:1.

12. A pigmented composition as claimed in claim 11, which comprises:
| | % w/w solids |
|---|---|
| Carboxylated acrylic copolymer emulsion (solids content 35 to 60%) | 15 to 40 |
| | |
| Rosin ester emulsion (solids content 40 to 60%) | 0 to 15 |
| | |
| Wax emulsion (solids content 15 to 40%) | 40 to 75 |
| | |
| Carbon black dispersion in water (solids content 30 to 50%) | 5 to 30 |
| | |
| For each of a surfactant/wetting agent, an antifoaming agent, a pH adjustment agent, a filler, a stabilizer, a lubricant, a reinforcing agent, a plasticizer, an extender, an adhesion promoter and a keying agent | 0 to 10 |
| | |
| Water | 0 to 40 |

13. A thermal transfer printing ribbon having a pigmented layer formed from a pigmented composition as claimed in any one of the preceding claims and optionally including a release and/or scratch resistant layer adjacent to the pigmented layer.

14. A method for making a thermal transfer printing ribbon comprising the steps of:
(i) providing a ribbon substrate;
(ii) as an optional step, coating the ribbon substrate with a release and/or scratch resistant composition to thereby form a release and/or scratch resistant layer overlying the ribbon substrate;
(iii) coating the ribbon substrate, or the release and/or scratch resistant layer formed in step (ii) if present, with a pigmented composition as claimed in any one of claims 1 to 12 to thereby form a pigmented layer.
